(19) Europäisches Patentamt
European Patent Office
Office européen des brevets

(11) **EP 3 915 053 B1**

(12) **EUROPEAN PATENT SPECIFICATION**

(45) Date of publication and mention
of the grant of the patent:
**31.07.2024 Bulletin 2024/31**

(21) Application number: **20702096.7**

(22) Date of filing: **23.01.2020**

(51) International Patent Classification (IPC):
*G06N 3/092* (2023.01)   *G06N 3/045* (2023.01)
*G06N 7/01* (2023.01)   *G06N 3/044* (2023.01)
*G06N 3/0464* (2023.01)

(52) Cooperative Patent Classification (CPC):
**G06N 3/045; G06N 3/092; G06N 7/01;** G06N 3/044;
G06N 3/0464

(86) International application number:
**PCT/EP2020/051689**

(87) International publication number:
**WO 2020/152300 (30.07.2020 Gazette 2020/31)**

(54) **CONTROLLING AN AGENT TO EXPLORE AN ENVIRONMENT USING OBSERVATION LIKELIHOODS**

STEUERUNG EINES MITTELS ZUR ERKUNDUNG EINER UMGEBUNG MITTELS BEOBACHTUNGSWAHRSCHEINLICHKEITEN

COMMANDE D'UN AGENT POUR EXPLORER UN ENVIRONNEMENT À L'AIDE DE PROBABILITÉS D'OBSERVATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2019 US 201962796041 P**

(43) Date of publication of application:
**01.12.2021 Bulletin 2021/48**

(73) Proprietor: **DeepMind Technologies Limited
London EC4A 3TW (GB)**

(72) Inventors:
• **PIOT, Bilal
London EC4A 3TW (GB)**
• **PIRES, Bernardo Avila
London EC4A 3TW (GB)**
• **AZAR, Mohammad Gheshlaghi
London EC4A 3TW (GB)**

(74) Representative: **Marks & Clerk GST
1 New York Street
Manchester M1 4HD (GB)**

(56) References cited:
**WO-A1-2018/211140**

• **JÜRGEN SCHMIDHUBER: "Formal Theory of
Creativity, Fun, and Intrinsic Motivation
(1990-2010)", IEEE TRANSACTIONS ON
AUTONOMOUS MENTAL DEVELOPMENT, IEEE,
USA, vol. 2, no. 3, 1 September 2010 (2010-09-01),
pages 230 - 247, XP011312918, ISSN: 1943-0604**

EP 3 915 053 B1

**Description**

BACKGROUND

This specification relates to processing data using machine learning models.

This specification further relates to methods and systems for training a neural network to control an agent which operates in an environment. In particular, the agent is controlled to explore an environment, and optionally also to perform a task in the environment.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step. An example of a recurrent neural network is a long short term (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network.

Jürgen Schmidhuber, "Formal Theory of Creativity, Fun, and Intrinsic Motivation (1990-2010)", IEEE Transactions on Autonomous Mental Development (Volume: 2, Issue: 3, Sept. 2010), p230-247 describes theoretically optimal (but not necessarily practical) ways of implementing the basic computational principles on exploratory, intrinsically motivated agents or robots, encouraging them to provoke event sequences exhibiting previously unknown, but learnable algorithmic regularities.

SUMMARY

According to a first aspect there is provided a computer-implemented method defined by claim 1 for generating actions to be performed by an electromechanical agent interacting with a real-world environment, the real-world environment taking at successive times a corresponding one of a plurality of states.

According to another aspect there is provided a system as defined by claim 10.

According to a further aspect there are provided one or more computer storage media as defined by claim 11.

This specification generally describes how a system implemented as computer programs in one or more computers in one or more locations can perform a method to train (that is, adjust the parameters of) an adaptive system ("neural network") used to select actions to be performed by an agent interacting with an environment.

In broad terms a reinforcement learning (RL) system is a system that selects actions to be performed by a reinforcement learning agent interacting with an environment. In order for the agent to interact with the environment, the system receives data characterizing the current state of the environment and selects an action to be performed by the agent in response to the received data. Data characterizing (at least partially) a state of the environment is referred to in this specification as an observation.

In general terms, the present disclosure proposes that a reinforcement learning system is trained, at least in part, based on a reward function which is calculated based on the difference between information about the environment which can be derived from two histories of interaction with the environment (that is, successive observations of the state of the environment, and successive actions performed on the environment), where one of the two histories comprises one of those observations and another of the histories does not do so. The reward value rewards behavior which maximizes this difference. This encourages the neural network to suggest actions which lead to informative observations.

One expression of this concept is a method for generating actions to be applied by an agent to the environment ("a subject system"), which at successive times (which may be labelled by the integer index t) is in one of a plurality of possible states. The method comprises successively modifying a neural network which is operative to generate the actions and which is defined by a plurality of network parameters. At a given current time (which can be denoted time $t+H$, where $H$ is a hyper-parameter defined below, and which is an integer which is at least one; in the case that $H$ is equal to one, the current time can be denoted just as $t+1$), the neural network receives a current observation (which we denote $o_{t+H}$). A reward generator generates a reward value (which can be denoted $r_{t+H-1}$) as a measure of the difference between the likelihood of the further observation $o_{t+H}$ under first and second statistical models of the environment. The first statistical model and second model are based on respective first and second histories of past observations and actions, where the most recent observation in the first history is more recent than the most recent observation in the second history. Typically, the second statistical model is not based on the one or more most recent actions and consequent observations which were used in generating the first statistical model, but otherwise the respective two statistical models are preferably based on the same history of actions and observations. The reward has a high value when the likelihood of the current observation under the first statistical model is higher than under the second statistical model. One or more network parameters of the neural network may be modified based on the reward value.

The updating of the neural network may be performed using any reward-based reinforcement learning algorithm, such as the "R2D2" algorithm proposed by Kapturowski et al. (Recurrent Experience Replay in Distributed Reinforcement Learning, in International Conference on Learning Representations, 2019).

The system described in this specification can train an action selection neural network to select actions to be performed by that agent the cause the agent to effectively explore an environment, seeking experiences which maximize the opportunities for learning about it. Experimentally, it has been found that the proposed training procedure can generate information about the environment (e.g. a predictive model of the environment) while being less sensitive than known exploration algorithms to noise in the environment or the observations. The agent can, for example, be used to discover items within the environment more quickly than a known exploration algorithm and using fewer computational resources. Optionally, the information gained about the environment can be used in training the neural network to control the agent to perform a task of modifying the environment. The greater knowledge of the environment leads to superior performance of the task, and to a learning procedure for the task which is faster and less computer-resource intensive.

Specifically, in some implementations, the above training process is a preliminary phase, performed to obtain information about the environment. The preliminary phase may be followed by a secondary training phase in which the reinforcement learning system is used to perform a task based on knowledge of the environment (e.g. derived from one of the histories) generated in the preliminary phase. In the secondary training phase, the reward function may not include any component relating to the two statistical models (i.e. the pair of statistical models may not be employed at all). Indeed, the reward component may actually include a component which penalizes actions which lead to observations which increase the divergence of the two statistical models, since this would encourage the neural network to control the agent within the portions of the environment which are already well-understood.

Alternatively, the preliminary training phase and secondary training phase may be integrated, for example by performing adaptive learning on a reinforcement learning system using a reward function which has a first reward component as described above (i.e. as a measure of the difference in the likelihood of the further observation $o_{t+k}$ according to the first and second statistical models), and a second reward component which is related to the success of the agent in performing a task which the system has to learn. The relative weightings of the two reward components may vary with time.

In either case, in some implementations, the agent may be controlled by the neural network to perform a task in which the agent manipulates one or more objects which are part of the environment and which are separate from (i.e. not part of) the agent. The task is typically defined based on one or more desired final positions of the object(s) following the manipulation.

Each of the first and second statistical models are probability distributions, over the possible states of the system, for the further observation $o_{t+H}$. We can denote the most recent observation in the first history as being $H$ steps into the past compared to the current time (i.e. at time t), where (as mentioned parenthetically above) H is an integer greater than zero. The most recent observation in the second history may be $H+1$ steps into the past compared to the current time. In other words, the second history is missing only the observation $o_t$ at time $t$. Thus, the reward value encodes the value of $o_t$ in predicting $o_{t+H}$. Both histories preferably include all observations of the environment which are available from a certain starting time (which may be denoted as $t=0$) up to their respective most recent observation. Furthermore, both histories preferably include all actions generated by the neural network in the environment after the starting time, i.e. all actions generated by the neural network from the starting time up to time t-1.

Optionally, the value of $H$ may be equal to one. Alternatively, the value of $H$ may be greater than one, so that the reward function encodes the value of the observation $o_t$ to predicting the observation $o_{t+H}$ relating to a time multiple time steps later. Thus, the reward function rewards the neural network for generating actions which only produce improved knowledge of the environment multiple time steps later.

In one form, the measure for comparing the first and second statistical models may be the difference between a logarithmic function of the probability of the further observation under the first probability distribution, and the logarithmic function of the probability of the further observation under the second probability distribution. This choice of the measure is intuitively reasonable, since it represents a cross-entropy of the distributions.

Each of the statistical models may be implemented by a respective adaptive system, defined by a plurality of parameters. The adaptive systems may receive the corresponding histories as an input. The parameters of the adaptive systems may be set in a preliminary training procedure, prior to the training of the neural network, using a known algorithm, using a database of training data, e.g. historic observations, subsequent respective actions and subsequent respective observations. Alternatively or additionally, the parameters of the adaptive systems may be updated during the training of the neural network, based on the new actions and corresponding observations generated during the training of the neural network.

In one form, each adaptive system comprises a respective probability distribution generation unit, which may be implemented as a perceptron, such as a multilayer perceptron. The probability generation unit receives an encoding (later in this document denoted $b_t$ in the case of the first statistical model) of the respective history and data (in the case of the first statistical model denoted later in this document as $a_t$ or more generally $\mathcal{A}_{t:t+k}$ where k is an integer $k$) encoding actions performed by the agent after the most recent action (in the case of the first statistical model denoted $a_{t-1}$) encoded in the respective history. The probability generation unit is arranged to generate a probability distribution for the further observation $o_{t+H}$, e.g. over all values it might take, subject optionally to certain assumptions, such as about predetermined range(s) in which its component(s) lie. These assumptions may be reflected in the possible outputs of the perceptron.

The encoding of the history of previous observations and actions is obtained by a recurrent unit, such as a GRU, which successively receives the actions and corresponding representations of the resulting observations. The representations of each observation are obtained as the output of a convolutional model which receives the observation.

Note that in the adaptive system of the second statistical model, a multi-action probability generation unit is operative to generate a probability distribution over the possible observations of the state of the system following the successive application of a corresponding plural number of actions generated by the neural network and input to the multi-action probability generation unit, without receiving information about the observations generated by the *H* most recent of those actions. Similarly, in the case that *H* is greater than one, the first statistical model does not receive information about the *H-1* most recent actions.

The reinforcement learning system may be implemented as one or more computer programs on one or more computers in one or more locations in which the systems, components, and techniques described below are implemented.

Optionally, in any of the above implementations, the observation at any given time step may further include data from a previous time step that may be beneficial in characterizing the environment, e.g., the action performed at the previous time step, the reward received at the previous time step, and so on.

BRIEF DESCRIPTION OF THE DRAWINGS

An example of the present disclosure will now be described for the sake of example only with reference to the following drawings, in which:

Fig. 1 shows the use of an example of an exploration system according to the present disclosure.
Fig. 2 shows schematically the structure of a possible realization of the exploration system of Fig. 1.
Fig. 3 is a flow diagram of an example process performed the exploration system of Fig. 1 for training a neural network of the exploration system.

Like reference numbers and designations in the various drawings indicate like elements.

DETAILED DESCRIPTION

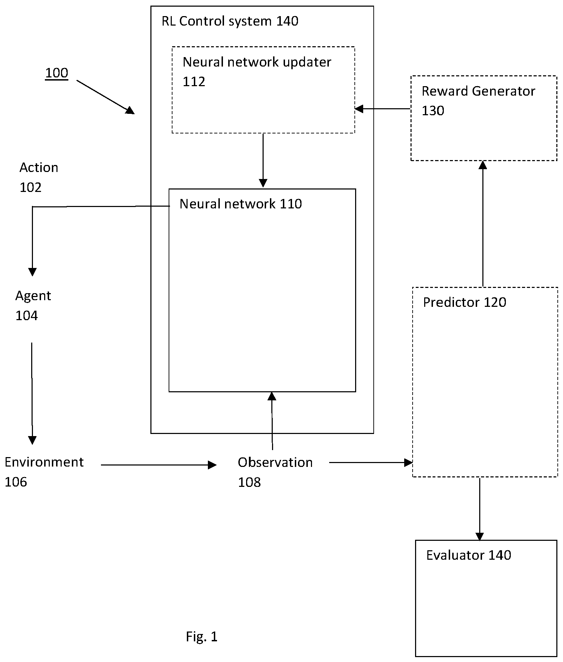

FIG. 1 shows an example control system 100 referred to as an exploration system. The exploration system 100 is an example of a system implemented as computer programs on one or more computers in one or more locations in which the systems, components, and techniques described below are implemented.

The exploration 100 selects actions 102 to be performed by an agent 104 interacting with an environment 106 at each of multiple steps.

In the following time step, a new observation 108 of the state of the environment 106 is received. The observation 108 is transmitted to the exploration system 100. The exploration system 100 selects a new action 102 for the agent 104 to perform.

The exploration system 100 includes a neural network 110 for generating the action 102. In some implementations, the neural network 110 may generate an output which indicates a specific action 102. In other implementations, the neural network 110 generates an output which defines a probability distribution over a set of possible actions, and the action 102 is generated by sampling the probability distribution. The neural network may be referred to in this case as a policy network.

During a training phase, the neural network 110 is adapted by the components of the exploration system 100 which are indicated dashed in Fig. 1. A predictor 120 of the exploration system 100 operates as a "world model" which, as described below, generates multiple statistical models of the environment 106. A reward generator 130 of the exploration system 100 generates a reward value based on a measure of the divergence between the likelihood of the latest observation 108 under first and second statistical models of the environment generated by the predictor 120. Based on the reward value, a neural network updater 112 of the exploration system 100 updates the neural network 110. The neural network 110 and neural network updater 112 may be collectively termed a RL control system 140. The RL control system may be of a design known in the literature.

In experiments performed by the present inventors of effectiveness of the exploration system 100, that effectiveness was monitored by an evaluator unit 140 described below. The evaluator unit 140 employed information about the environment 106 which was not available to the exploration system 100. The evaluator unit 140 would not be used in typical applications of the exploration system 100.

The exploration system 100 described herein is widely applicable and is not limited to one specific implementation. However, for illustrative purposes, a few example implementations of the exploration system 100 are described next.

The environment is a real-world environment and the agent is an electromechanical agent interacting with the real-world environment. For example, the agent may be a robot or other static or moving machine interacting with the environment. For example, the agent may move in the environment, either in terms of the configuration of its components and/or translationally, i.e. from one location in the environment to another. For example, the agent may be an autonomous or semi-autonomous land or air or sea vehicle navigating through the environment. In the case that the reinforcement learning system is trained to accomplish a specific task, it may be to locate an object of interest in the environment or to move an object of interest to a specified location in the environment or to navigate to a specified destination in the environment.

In these implementations, the observations may include, for example, one or more of images, object position data, and sensor data to capture observations as the agent interacts with the environment, for example sensor data from an image, distance, or position sensor or from an actuator.

In some cases, the agent is considered as a part of the environment (environment). The observation may include a position of the agent within the environment. For example in the case of a robot the observations may include data characterizing the current state of the robot, e.g., one or more of: joint position, joint velocity, joint force, torque or acceleration, for example gravity-compensated torque feedback, and global or relative pose of a part of the robot such as an arm and/or of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In the unclaimed case of an electronic agent the observations may include data from one or more sensors monitoring part of a plant or service facility such as current, voltage, power, temperature and other sensors and/or electronic signals representing the functioning of electronic and/or mechanical items of equipment.

In these implementations, the actions may be control inputs to control the robot, e.g., torques for the joints of the robot or higher-level control commands; or to control the autonomous or semi-autonomous land or air or sea vehicle, e.g., torques to the control surface or other control elements of the vehicle or higher-level control commands; or e.g. motor control data. Furthermore, the action may comprise or consist of moving the agent within the environment.

In other words, the actions can include for example, position, velocity, or force/torque/acceleration data for one or more joints of a robot or parts of another mechanical agent. Action data may include data for these actions and/or electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g. braking and/or acceleration of the vehicle.

In some unclaimed implementations the environment is a simulated environment and the agent is implemented as one or more computers interacting with the simulated environment.

For example the simulated environment may be a simulation of a robot or vehicle and the exploration system 100 may be trained on the simulation. For example, the simulated environment may be a motion simulation environment, e.g., a driving simulation or a flight simulation, and the agent is a simulated vehicle navigating through the motion simulation. In these unclaimed implementations, the actions may be control inputs to control the simulated user or simulated vehicle. A simulated environment can be useful for training a system of the type described herein before using the system in the real world.

In another unclaimed example, the simulated environment may be defined by a computer program. For example, it may be a video game and the agent may be a simulated user playing the video game. Alternatively, the agent may test the computer program for faults or other undesirable behavior. For example, at different times it may test different respective portions of the computer program (e.g. portions associated with different respective software functions), which are analogous to different locations in a real world environment. In one option, the computer program generates a user interface, and the agent tests possible inputs to the user interface to identify inputs which generate a problem. Once these inputs are identified action may be taken to improve the user interface, thus resulting in an improved user interface permitting faster and/or more reliable input of data by a user.

In a further unclaimed example the environment may be a protein folding environment such that each state is a respective state of a protein chain and the agent is a computer system for determining how to fold the protein chain. In this example, the actions are possible folding actions for folding the protein chain and the result to be achieved may include, e.g., folding the protein so that the protein is stable and so that it achieves a particular biological function. As another example, the agent may be a mechanical agent that performs or controls the protein folding actions selected by the system automatically without human interaction. The observations may include direct or indirect observations of a state of the protein and/or may be derived from simulation.

In a similar way the environment may be a drug design environment in an unclaimed example such that each state is a respective state of a potential pharma chemical drug and the agent is a computer system for determining elements of the pharma chemical drug and/or a synthetic pathway for the pharma chemical drug. The drug/synthesis may be designed based on a reward derived from a target for the drug, for example in simulation. As another example, the agent may be a mechanical agent that performs or controls synthesis of the drug.

Generally in the unclaimed case of a simulated environment the observations may include simulated versions of one or more of the previously described observations or types of observations and the actions may include simulated versions of one or more of the previously described actions or types of actions.

Another unclaimed possible environment is the space of possible designs of an integrated circuit, such as an application-specific integrated circuit (ASIC), incorporating certain circuit components, with the various states of the environment corresponding to placements and/or connections of the components within the integrated circuit. The agent can explore this space to identify an ASIC design which is superior according to one or more integrated circuit evaluation criteria.

In some other unclaimed applications the agent may control actions in a real-world environment including items of equipment, for example in a data center or grid mains power or water distribution system, or in a manufacturing plant or service facility. The observations may then relate to operation of the plant or facility. For example the observations may include observations of power or water usage by equipment, or observations of power generation or distribution control, or observations of usage of a resource or of waste production. The agent may control actions in the environment to increase efficiency, for example by reducing resource usage, and/or reduce the environmental impact of operations in the environment, for example by reducing waste. The actions may include actions controlling or imposing operating conditions on items of equipment of the plant/facility, and/or actions that result in changes to settings in the operation of the plant/facility e.g. to adjust or turn on/off components of the plant/facility. In a further example, the observations may include temperature measurements of the plant or facility, and the actions relate to controlling elements which generate or remove heat, such as heating or cooling systems of the plant or facility.

In some further unclaimed applications, the environment is a real-world environment and the agent manages distribution of tasks across computing resources e.g. on a mobile device and/or in a data center. In these implementations, the actions may include assigning tasks to particular computing resources.

As further example, the actions may include presenting advertisements, the observations may include advertisement impressions or a click-through count or rate, and the reward may characterize previous selections of items or content taken by one or more users.

Returning to Fig. 1, we now provide a more specific description of the operations of the units depicted there. Consider a partially observable environment 106 where at time t an observation 108 denoted $o_t$ is generated. The exploration system 100 then selects an action 102 denoted $a_t$ which the agent 104 performs. The environment 106 then generates a new observation $o_{t+1}$ at the next time step. We assume observations $o_t$ are generated by an underlying process $x_t$ following Markov dynamics, i.e. $x_{t+1} \sim P(\cdot|x_t, a_t)$, where $P$ is the dynamics of the underlying process. Although we do not explicitly use the corresponding terminology, this process can be formalised in terms of Partially Observable Markov Decision Processes (POMDP).

At time $t$, the future observation $o_{t+1}$ in a POMDP can also be seen as the output of a stochastic mapping with input the current history. Indeed, at any given time $t$, let the current history $h_t$ be all past actions and observations

$$h_t \stackrel{\text{def}}{=} (o_0, a_0, o_1, a_1 \ldots a_{t-1}, o_t)$$ . Then we define $\mathbb{P}(\cdot \,|h_t, a_t)$ which is the probability distribution of $o_{t+1}$ knowing the history $h_t$ and the action $a_t$.

One can generalise this notion for k-step prediction: for any integers t ≥ 0 and k ≥ 1, let us denote by $t : t+k$ the integer interval $\{t, ..., t + k - 1\}$ and let

$$\mathcal{A}_{t:t+k} \stackrel{\text{def}}{=} (a_t, ..., a_{t+k-1})$$

and $\mathcal{O}_{t:t+k} \overset{\text{def}}{=} (o_t, \dots, o_{t+k-1})$ be the sequence of actions and observations from time $t$ up to time $t + k - 1$, respectively. Then $o_{t+k}$ can be seen as a sample drawn from the probability distribution

$$\mathbb{P}(\cdot \,|h_t, \mathcal{A}_{t:t+k}),$$

which is the $k$-step open-loop prediction model of the observation $o_{t+k}$. We also use the short-hand notation

$$\mathbb{P}_{t+k|t} = \mathbb{P}(\cdot \,|h_t, \mathcal{A}_{t:t+k})$$

as the probability distribution *of* $o_{t+k}$ given the history $h_t$ and the sequence of actions $\mathcal{A}_{t:t+k}$.

The predictor 120 (world model) should capture what the agent currently knows about the world so that it can make predictions based on what it knows. Thus, the predictor 120 is designed to predict future observations given the past. More precisely, the predictor 120 generates an internal representation $b_t$ by making predictions of future frames $o_{t+k}$ conditioned on a sequence of actions $\mathcal{A}_{t:t+k}$ and given the past $h_t$. If the learnt representation $b_t$ is able to predict the probability of any future observation conditioned on any sequence of actions and history, then this representation $b_t$ contains all information about the belief state (i.e., the distribution over the ground truth state $x_t$).

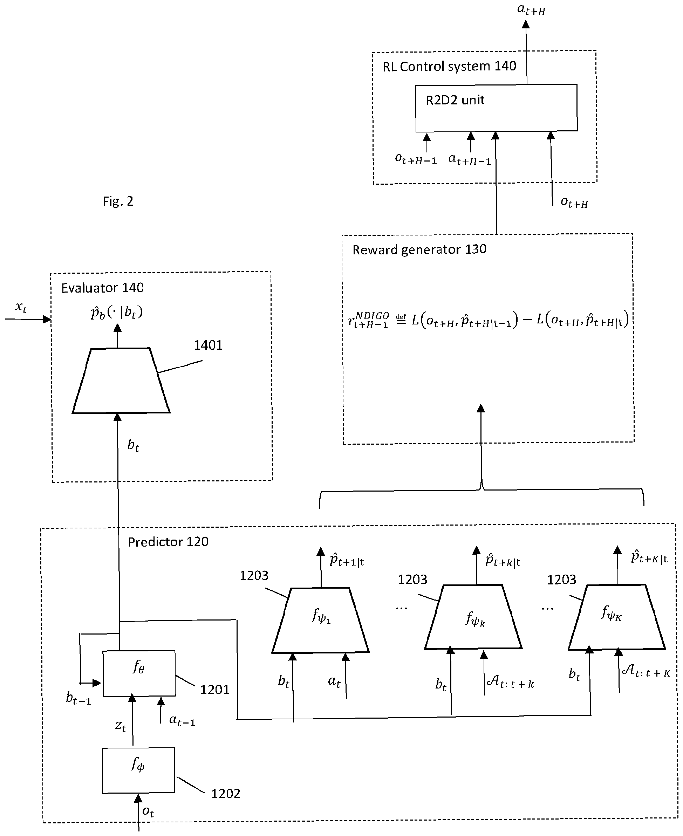

In one implementation of the exploration system 100, is as illustrated in Fig. 2, in combination with the evaluator 140 which as mentioned above is used for experimental investigations of the exploration system but which is not present in most applications of the explorations system 100. Note that, as described in more detail below, the system employs a control parameter $H$ referred to as the "horizon", which may be equal to 1, or may take a higher value. The illustrations of the operation of the reward generator 130 and the RL control system 140 in Fig. 2 illustrate how an update is made to the neural network 110 in a time step $t+H$ after the observation $o_{t+H}$ has been received, based on statistical models generated by the predictor 120 at time step $t+H$.

As shown in Fig. 2, the predictor 120 uses a recurrent neural network (RNN) 1201 which performs function $f_\theta$ and is fed with a concatenation of observation features $z_t$ and the action $a_t$ (encoded as a one-hot vector). The observation features $z_t$ are obtained by applying an adaptive model such as a convolutional neural network (CNN) 1202, which performs a function $f_\phi$, to the observation $o_t$. The RNN 1201 is a Gated Recurrent Unit (GRU) and the internal representation is the hidden state of the GRU, that is $b_t = f_\theta(z_t, a_{t-1}, b_{t-1})$, which can be considered an encoded history of the observations received by the convolutional neural network 1202 and the actions received by the RNN 1201. We initialise this GRU 1201 by setting its hidden state to the null vector $0$, and using $b_0 = f_\theta(z_0, a, 0)$ where $a$ is a fixed, arbitrary action and $z_0$, are the features corresponding to the original observation $o_0$. We train this RNN 102 to generate the representation $b_t$ with some future-frame prediction tasks conditioned on sequences of actions and the representation $b_t$. These frame prediction tasks consist in estimating the probability distribution, for various $K \geq k \geq l$ (with $K \in \mathbb{N}^*$ to be specified later), of future observation $o_{t+k}$ conditioned on the internal representation $b_t$ and the sequence of actions $\mathcal{A}_{t:t+k}$. We denote these estimates by $\hat{p}_{t+k|t}(\cdot|b_t, \mathcal{A}_{t:t+k})$ or simply by $\hat{p}_{t+k|t}$ for conciseness and when no confusion is caused. As the notation suggests, $\hat{p}_{t+k|t}$ is used as an estimate of $\mathbb{P}_{t+k|t}$. The neural architecture consists in $K$ different neural nets 1203, which preform the respective functions $\{f_{\psi_k}\}_{k=1}^K$. Each neural net $f_{\psi_k}$ may be implemented as a multi-layer perceptron (MLP). It receives as input the concatenation of the internal representation $b_t$ and the sequence of actions

$$\mathcal{A}_{t:t+k},$$

and outputs the distributions over observations: $\hat{p}_{t+k|t} = f_{\psi k}(b_t, \mathcal{A}_{t:\,t+k})$. For a fixed $t \geq 0$ and a fixed $K \geq k \geq 1$, the loss function $L(o_{t+k}, \hat{p}_{t+k|t})$ at time step $t + k - 1$ associated with the network $f_{\psi k}$ is a cross entropy loss: $L(o_{t+k}, \hat{p}_{t+k|t}) = -ln(\hat{p}_{t+k|t}(o_{t+k}))$. We finally define for any given sequence of actions and observations the representation loss function $L_{repr}$ as the sum of these cross entropy losses: $L_{repr} = \Sigma_{t\geq0, K\geq k\geq1} L(o_{t+k}, \hat{p}_{t+k|t})$.

We now turn to the issue of the evaluation of the learned model. This is partly performed using the evaluator 140. In the POMDP setting, the real state $x_t$ represents all there is to know about the world at time $t$. By constructing a belief state, which is a distribution $P_b(\cdot|h_t)$ over the possible states conditioned on the history $h_t$, the agent can assess its uncertainty about the real state $x_t$ given the history $h_t$. In order to assess the quality of the learnt representation $b_t$, the evaluator 140 uses a glass-box approach to build a belief state of the world. It consists of training a neural network 1401 such as a MLP, performing function $f_\tau$, fed by the internal representation $b_t$ to predict a distribution $\hat{p}_b(\cdot|b_t)$ over the possible real state $x_t$. This kind of approach is only possible in artificial or controlled environments where the real state is available to the experimenter but yet not given to the agent. No gradient from $f_\tau$ is back-propagated to the predictor 120 so the evaluation does not influence the learning of the representation $b_t$ and the behaviour of the agent. For a fixed $t \geq 0$, the loss used to trained $f_\tau$ is a cross entropy loss $L_{discovery}(x_t, \hat{p}_b(\cdot|b_t)) \overset{\text{def}}{=} -ln(\hat{p}_b(x_t|b_t))$. We call this loss "discovery loss", and use it as a measure of how much information about the whole world the agent is able to encode in its internal representation $b_t$, i.e., how much of the world has been discovered by the agent. Experimentally, it was found that the discovery loss of the example of the disclosure shown in Fig. 2 declines more rapidly than other RL algorithms used as a baseline, and faster in the case of H=4 than in the case of H=1 or H=2. This was particularly true in the case that the environment 106 contained a source of white noise.

We now turn to a description of the training of the neural network 110. This is done such that the exploration system 100 operates as a discovery agent that learns to seek new information in its environment and then incorporate this information into the world representation provided by the predictor 120. This concept may be referred to as NDIGO (Neural Differential Information Gain Optimisation). The neural network updater 112 performs this information-seeking behaviour as a result of optimising an intrinsic reward. Therefore, the agent's exploratory skills depend critically on the reward generator 130 supplying an appropriate reward signal that encourages discovering the world. Ideally, this reward signal is high when the agent gets an observation containing new information about the real state $x_t$. As the exploration system 100 cannot access $x_t$ at training time, the exploration system 100 relies on the accuracy of our future observations predictions to estimate the information it has about $x_t$.

Intuitively, for a fixed horizon $H \in \mathbb{N}^*$, the prediction error loss $L(o_{t+H}, \hat{p}_{t+H|t}) = -ln(\hat{p}_{t+H|t}(o_{t+H}))$ is a good measure on how much information $b_t$ is lacking about the future observation $o_{t+H}$. The higher the loss, the more uncertain the agent is about the future observation $o_{t+H}$ so the less information it has about this observation. Therefore, one could define an intrinsic reward directly as the prediction error loss, thus encouraging the agent to move towards states for which it is the less capable of predicting future observations. The hope is that the less information we have in a certain belief state, the easier it is to gain new information. Although this approach may have good results in deterministic environments, it is however not suitable in certain stochastic environments. For instance, consider the extreme case in which the agent has the opportunity to observe white noise such as a TV displaying static. An agent motivated with prediction error loss would continually receive a high intrinsic reward simply by staying in front of this TV, as it cannot improve its predictions of future observations, and would effectively remain fascinated by this noise.

The reason why a reward based directly on the naive prediction error loss fails in such a simple example is that the agent identifies that a lot of information is lacking, but does not acknowledge that no progress is made towards acquiring this lacking information. To overcome this issue, reward generator 130 generates the "NDIGO reward" defined, for a fixed $K \geq H \geq 1$, as follows:

$$r_{t+H-1}^{NDIGO} \overset{\text{def}}{=} L\big(o_{t+H}, \hat{p}_{t+H|t-1}\big) - L\big(o_{t+H}, \hat{p}_{t+H|t}\big), (1)$$

where $o_{t+H}$ represents the future observation considered and $H$ is the horizon of NDIGO. The two terms on the right-hand side of Equation (1) measure how much information the agent lacks about the future observation $o_{t+H}$ knowing all past observations prior to $o_t$ with $o_t$ either excluded (the first term on the right hand side) or included (the second term on the right hand side). Intuitively, we take the difference between the information we have at time $t$ with the information we have at time $t - 1$. This way we get an estimate of how much information the agent gained about $o_{t+H}$ by observing

$o_t$. Note that the reward $r_{t+H-1}^{NDIGO}$ is attributed at time $t + H$ - 1 in order to make it dependent on $h_{t+H-1}$ and $a_{t+H-1}$ only (and not on the policy), once the prediction model $\hat{p}$ has been learnt. If the reward had been assigned at time $t$ instead (time of prediction) it would have depended on the policy used to generate the action sequence $\mathcal{A}_{t:\,t+k}$, which would have violated the Markovian assumption required to train the RL algorithm. Coming back to our broken TV example, the white noise in $o_t$ does not help in predicting the future observation $o_{t+H}$. The NDIGO reward is then the difference of two large terms of similar amplitude, leading to a small reward: while acknowledging that a lot of information is missing (large prediction error loss) the NDIGO reward indicates that no more of it can be extracted (small difference of prediction error loss). Our experiments show that using NDIGO allows the agent to avoid being stuck in the presence of noise, thus confirming these theoretical considerations.

We now turn to the algorithm used by the RL control system 140. As mentioned above, this can be a conventional system but which employs the intrinsic reward $r_{t+H-1}^{NDIGO}$. Specifically, the RL control system 120 is implemented in our experiments using the state-of-the-art RL algorithm R2D2 to optimise the neural network 110. The NDIGO agent interacts with its world using the NDIGO policy to obtain new observation $o_{t+k}$, which is used to train the world model by minimising the future prediction loss $L_{t+k|t} = L(o_{t+k}, \hat{p}_{t+k|t})$. The losses $L_{t+k|t}$ are then used to obtain the intrinsic reward at the next time step, and the process is then repeated. Information gain has been widely used as the novelty signal in the literature. A very broad definition of the information gain is the distance (or divergence) between distributions on any random event of interest $\omega$ before and after a new sequence of observations. Choosing the random event to be the future observations or actions and the divergence to be the Kullback-Leiber divergence then the $k$-step predictive information gain

$$IG(o_{t+k}, \mathcal{O}_{t:t+k} | h_t, \mathcal{A}_{t:\,t+k})$$

of the future event $o_{t+k}$ with respect to the sequence of observations $\mathcal{O}_{t:t+k}$ is defined as:

$$IG(o_{t+k}, \mathcal{O}_{t:t+k} | h_t, \mathcal{A}_{t:\,t+k}) \stackrel{\text{def}}{=}$$

$$KL\big(\mathbb{P}_{t+k|t+k-1} \,\|\, \mathbb{P}_{t+k|t-1}\big),$$

and measures how much information can be gained about the future observation $o_{t+k}$ from the sequence of past observations $\mathcal{O}_{t:t+k}$ given the whole history $h_t$ up to time step $t$ and the sequence of actions $\mathcal{A}_{t:\,t+k}$ from $t$ up to $t + k$ - 1. In the case of $k = 1$ we recover the 1-step information gain on the next observation $o_{t+1}$ due to $o_t$. We also use the following short-hand notation for the information gain $IG_{t+k|t} = IG(o_{t+k}, \mathcal{O}_{t:t+k} | h_t, \mathcal{A}_{t:\,t+k})$ for every $k \geq 1$ and $t \geq 0$. Also by convention we define $IG_{t+k|t} = 0$.

We now show that the NDIGO intrinsic reward $r_{t+H-1}^{NDIGO}$ can be expressed as the difference of information gain due to $\mathcal{O}_{t:t+H}$ and $\mathcal{O}_{t+1:t+H}$. For a given horizon $H \geq 1$ and $t \geq 0$, the intrinsic reward for time step $t + H$ - 1 is:

$$r_{t+H-1}^{NDIGO} \stackrel{\text{def}}{=} L\big(o_{t+H}, \hat{p}_{t+H|t-1}\big) - L\big(o_{t+H}, \hat{p}_{t+H|t}\big)$$
$$= ln\left(\frac{\hat{p}_{t+H|t}(o_{t+H})}{\hat{p}_{t+H|t-1}(o_{t+H})}\right)$$

Given that $\hat{p}_{t+n|t}$ and $\hat{p}_{t+H|t-1}$ are respectively an estimate of $\mathbb{P}_{t+H|t}$ and $\mathbb{P}_{t+H|t-1}$, and based on the fact that these estimates become more accurate as the number of samples increases, we have:

$$
\begin{aligned}
\mathbb{E}[r_{t+H-1}^{NDIGO}] = \quad & \mathbb{E}_{o_{t+H}\sim\mathbb{P}_{t+H|t+H-1}}\left[ln\left(\frac{\hat{p}_{t+H|t}(o_{t+H})}{\hat{p}_{t+H|t-1}(o_{t+H})}\right)\right] \\
\cong \quad & \mathbb{E}_{o_{t+H}\sim\mathbb{P}_{t+H|t+H-1}}\left[ln\left(\frac{\mathbb{P}_{t+H|t}(o_{t+H})}{\mathbb{P}_{t+H|t-1}(o_{t+H})}\right)\right] \quad\quad (2) \\
= KL\big(\hat{\mathbb{P}}_{t+H|t+H-1} \parallel \hat{\mathbb{P}}_{t+H|t-1}\big) &- KL\big(\hat{\mathbb{P}}_{t+H|t+H-1} \parallel \hat{\mathbb{P}}_{t+H|t}\big) \\
= IG_{t+H|t} &- IG_{t+H|t-1}
\end{aligned}
$$

The first term $IG_{t+H|t}$ in Equation (2) measures how much information can be gained about $o_{t+H}$ from the sequence of past observations $O_{t:t+H}$ whereas the second term $IG_{t+H|t-1}$ measures how much information can be gained about $o_{t+H}$ from the sequence of past observations $O_{t+1:t+H}$. Therefore, as $O_{t+1:t+H} = O_{t:t+H} \setminus \{o_t\}$, the expected value of the NDIGO reward at step $t + H - 1$ is equal to the amount of additional information that can be gained by the observation $o_t$ when trying to predict $o_{t+H}$.

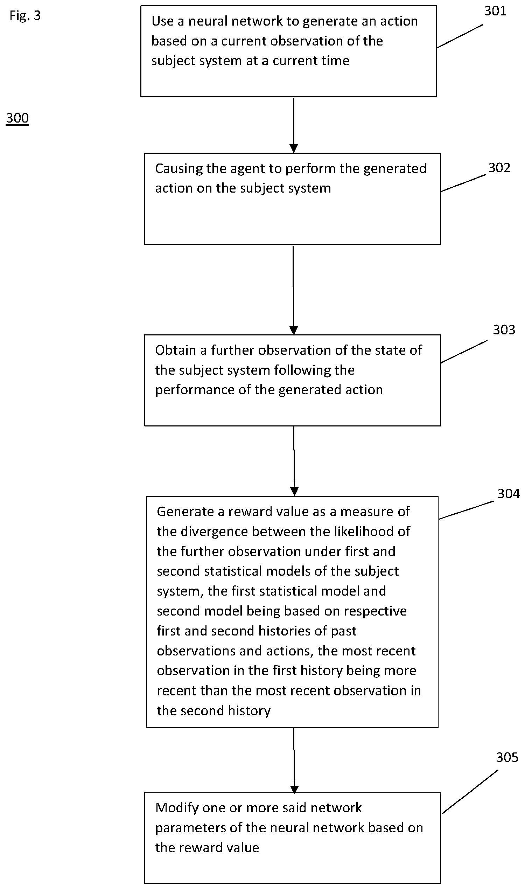

Turning to Fig. 3, a method 300 which is an example of the present disclosure is summarized. The method 300 is performed repeatedly and iteratively, such as by the exploration system 100 of Fig. 1. In a first step 301, the neural network 110 is used to generate an action 102 based on a current observation of the subject system at a current time. In a second step 302, the generated action is passed to the agent 104, thereby causing the agent 104 to perform the generated action 102 on the subject system. In a third step 303, a further observation 108 of the state of the subject system is obtained following the performance of the generated action. In a fourth step 304, the reward generator 130 generates a reward value as a measure of the divergence between the likelihood of the further observation under first and second statistical models of the subject system generated by the predictor 120. As discussed above, the first statistical model and second model are based on respective first and second histories of past observations and actions, and the most recent observation in the first history is more recent than the most recent observation in the second history. In a fifth step 305, the neural network updater 112 modifies one or more parameters of the neural network 110 based on the reward value generated in step 304.

Various modifications can be made to the system shown in Fig. 2. For example, although $K$ networks 1203 are shown, not all are used in the calculation of the reward value, and so others can be omitted. It is for example, only possible to provide two of the networks. However, it is more convenient to use $K=H$ since the networks 1203 for low values of $k$ can be used to initialise the networks 1203; otherwise, in the case of $H$ being large, the networks 1203 for large $k$ may be less accurate if they are learned from scratch.

In another example, in one the predictor 120 of Fig. 2 is replaced by one in which, instead of data characterizing the multiple statistical models $\hat{p}_{t+k|t}$ being generated by respective neural networks 1203 as in Fig. 2, the data characterizing $\hat{p}_{t+k|t}$ for $k=1, ...K$ are instead generated as the successive outputs of a single neural network such as a MLP upon the neural network receiving as input $b_t$ and the successive $K$ internal states $a_{t,k}$ (for $k=1, ...K$) of a GRU during K iterations. Specifically, in the first iteration, the GRU receives as inputs a predetermined vector (denoted 0) and $a_t$, and outputs its internal state $a_{t,1}$; the consequent output of the GRU is concatenated with $b_t$, and used by the MLP to generate $\hat{p}_{t+1|t}$. In each further iteration (k=2, ...K) the GRU receives its internal state $a_{t,k-1}$ output in the previous iteration and $a_{t+k-1}$ ; the consequent output of the GRU is concatenated with $b_t$ are used by the MLP to generate $\hat{p}_{t+k|t}$.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory program carrier for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit). For example, the processes and logic flows can be performed by and apparatus can also be implemented as a graphics processing unit (GPU).

Computers suitable for the execution of a computer program include, by way of example, can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of the claimed invention, but rather as descriptions of features that may be specific to particular embodiments of the claimed invention. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

**Claims**

1. A computer-implemented method for generating actions to be performed by an electromechanical agent (104) interacting with a real-world environment (106), the real-world environment (106) taking at successive times a corresponding one of a plurality of states,

   the method comprising successively modifying a neural network (110) which is operative to generate the actions and defined by a plurality of network parameters, by, at each of a plurality of successive time steps:

   (a) using the neural network (110) to generate an action based on a current observation of the real-world environment (106) at the time step;
   (b) causing the electromechanical agent (104) to perform the generated action on the real-world environment (106);
   (c) obtaining a further observation of the state of the real-world environment (106) following the performance of the generated action by the electromechanical agent (104);
   (d) generating a reward value as a measure of the divergence between (i) the likelihood of the further observation under a first statistical model of the real-world environment (106) and (ii) the likelihood of the further observation under a second statistical model of the real-world environment (106), wherein:

   the first statistical model is based on a first history of past observations of the state of the real-world environment (106) and actions,
   the second statistical model is based on a second history of past observations of the state of the real-world environment (106) and actions, and
   the most recent observation in the first history is more recent than the most recent observation in the second history; and

   (e) modifying one or more said network parameters of the neural network (110) based on the reward value; wherein

   the first and second statistical models are respective first and second probability distributions for the further observation, the most recent observation in the first history being H time steps into the past compared to the time step, where H is an integer greater than zero.

2. A computer-implemented method according to claim 1 in which the most recent observation in the second history is H+1 steps into the past compared to the time step; preferably, in which H is greater than one.

3. A computer-implemented method according to claim 1 or 2, in which the measure is the difference between a logarithmic function of the probability of the further observation under the first probability distribution, and the logarithmic function of the probability of the further observation under the second probability distribution.

4. A computer-implemented method according to any of claims 1 to 3, in which each statistical model is defined by a respective adaptive system defined by a plurality of parameters; preferably,

in which each adaptive system comprises a respective probability distribution generation unit which receives an encoding of the respective history and data encoding actions performed by the electromechanical agent (104) after the most recent action recorded in the respective history, the probability distribution generation unit being arranged to generate a probability distribution for the further observation over the plurality of states of the system; more preferably,
in which the probability distribution generation unit is a multi-layer perceptron.

5. A computer-implemented method according to claim 4 in which the encoding is generated by a recurrent unit which successively receives the actions and corresponding representations of the resulting observations; preferably, in which the representation of each observation is obtained as the output of a convolutional model which receives the observation.

6. A computer-implemented method according to claim 4 or 5 in which the adaptive system for the second statistical model is a multi-action probability generation unit operative to generate a respective probability distribution over the possible observations of the state of the system following the successive application of a corresponding plural number of actions generated by the neural network (110) and input to the multi-action probability generation unit.

7. A computer-implemented method according to any of claims 1 to 6 in which the reward value further comprises a reward component indicative of an extent to which the action performs a task.

8. A computer-implemented method according to any of claims 1 to 7 in which neural network (110) is a policy network which outputs a probability distribution over possible actions, the action being generated as a sample from the probability distribution.

9. A computer-implemented method according to any of claims 1 to 8 in which each observation is a sample from a probability distribution based on the state of the real-world environment (106).

10. A system comprising one or more computers and one or more storage devices storing instructions that when executed by the one or more computers cause the one or more computers to perform the method of any one of claims 1-9.

11. One or more computer storage media storing instructions that when executed by one or more computers cause the one or more computers to perform the method of any one of claims 1-9.

**Patentansprüche**

1. Rechnerimplementiertes Verfahren zum Erzeugen von Handlungen, die durch ein elektromechanisches Mittel (104) durchzuführen sind, das mit einer realen Umgebung (106) in Wechselwirkung tritt, wobei die reale Umgebung (106) zu aufeinanderfolgenden Zeiten einen entsprechenden von einer Vielzahl von Zuständen annimmt,

wobei das Verfahren das aufeinanderfolgende Modifizieren eines neuronalen Netzes (110), das funktionsfähig ist, um die Handlungen zu erzeugen, und durch eine Vielzahl von Netzparametern definiert wird, umfasst, durch, bei jedem von einer Vielzahl von aufeinanderfolgenden Zeitschritten:

(a) Verwenden des neuronalen Netzes (110), um eine Handlung auf Grundlage einer aktuellen Beobachtung der realen Umgebung (106) bei dem Zeitschritt zu erzeugen;

(b) Veranlassen, dass das elektromechanische Mittel (104) die erzeugte Handlung an der realen Umgebung (106) durchführt;

(c) Erlangen einer weiteren Beobachtung des Zustandes der realen Umgebung (106) anschließend an die Durchführung der erzeugten Handlung durch das elektromechanische Mittel (104);

(d) Erzeugen eines Belohnungswertes als ein Maß der Abweichung zwischen (i) der Wahrscheinlichkeit der weiteren Beobachtung unter einem ersten statistischen Modell der realen Umgebung (106) und (ii) der Wahrscheinlichkeit der weiteren Beobachtung unter einem zweiten statistischen Modell der realen Umgebung (106), wobei:

das erste statistische Modell auf einem ersten Verlauf von vergangenen Beobachtungen des Zustandes der realen Umgebung (106) und von Handlungen basiert,
das zweite statistische Modell auf einem zweiten Verlauf von vergangenen Beobachtungen des Zustandes der realen Umgebung (106) und von Handlungen basiert, und
die jüngste Beobachtung in dem ersten Verlauf jünger ist als die jüngste Beobachtung in dem zweiten Verlauf; und

(e) Modifizieren eines oder mehrerer der Netzparameter des neuronalen Netzes (110) auf Grundlage des Belohnungswertes; wobei

das erste und das zweite statistische Modell jeweils erste und zweite Wahrscheinlichkeitsverteilungen für die weitere Beobachtung sind, wobei die jüngste Beobachtung in dem ersten Verlauf, verglichen mit dem Zeitschritt, H Zeitschritte in der Vergangenheit liegt, worin H eine ganze Zahl größer als Null ist.

2. Rechnerimplementiertes Verfahren nach Anspruch 1, bei dem die jüngste Beobachtung in dem zweiten Verlauf, verglichen mit dem Zeitschritt, H+1 Schritte in der Vergangenheit liegt; bei dem H vorzugsweise größer als Eins ist.

3. Rechnerimplementiertes Verfahren nach Anspruch 1 oder 2, bei dem das Maß die Differenz zwischen einer logarithmischen Funktion der Wahrscheinlichkeit der weiteren Beobachtung unter der ersten Wahrscheinlichkeitsverteilung und der logarithmischen Funktion der Wahrscheinlichkeit der weiteren Beobachtung unter der zweiten Wahrscheinlichkeitsverteilung ist.

4. Rechnerimplementiertes Verfahren nach einem der Ansprüche 1 bis 3, bei dem jedes statistische Modell durch ein jeweiliges adaptives System definiert wird, das durch eine Vielzahl von Parametern definiert wird; vorzugsweise,

bei dem jedes adaptive System eine jeweilige Wahrscheinlichkeitsverteilungserzeugungseinheit umfasst, die eine Codierung der jeweiligen Verlaufs- und Datencodierungshandlungen empfängt, die durch das elektromechanische Mittel (104) nach der jüngsten Handlung durchgeführt werden, die in dem jeweiligen Verlauf aufgezeichnet wird, wobei die Wahrscheinlichkeitsverteilungserzeugungseinheit angeordnet ist, um eine Wahrscheinlichkeitsverteilung für die weitere Beobachtung über die Vielzahl von Zuständen des Systems zu erzeugen; bevorzugter,
bei dem die Wahrscheinlichkeitsverteilungserzeugungseinheit ein mehrlagiges Perzeptron ist.

5. Rechnerimplementiertes Verfahren nach Anspruch 4, bei dem die Codierung durch eine rekurrente Einheit erzeugt wird, die aufeinanderfolgend die Handlungen und entsprechenden Darstellungen der sich ergebenden Beobachtungen empfängt; vorzugsweise,
bei dem die Darstellung jeder Beobachtung als die Ausgabe eines Faltungsmodells, das die Beobachtung empfängt, erhalten wird.

6. Rechnerimplementiertes Verfahren nach Anspruch 4 oder 5, bei dem das adaptive System für das zweite statistische Modell eine Wahrscheinlichkeitserzeugungseinheit für Mehrfach-Handlungen ist, die funktionsfähig ist, um eine jeweilige Wahrscheinlichkeitsverteilung über die möglichen Beobachtungen des Zustandes des Systems anschließend an die aufeinanderfolgende Anwendung einer entsprechenden Mehrzahl von Handlungen, die durch das neuronale Netz (110) erzeugt und in die Wahrscheinlichkeitserzeugungseinheit für Mehrfach-Handlungen eingegeben werden, zu erzeugen.

7. Rechnerimplementiertes Verfahren nach einem der Ansprüche 1 bis 6, bei dem der Belohnungswert ferner eine Belohnungskomponente umfasst, die ein Ausmaß angibt, in dem die Handlung eine Aufgabe durchführt.

8. Rechnerimplementiertes Verfahren nach einem der Ansprüche 1 bis 7, bei dem ein neuronales Netz (110) ein Richtliniennetz ist, das eine Wahrscheinlichkeitsverteilung über mögliche Handlungen ausgibt, wobei die Handlung als eine Stichprobe aus der Wahrscheinlichkeitsverteilung erzeugt wird.

9. Rechnerimplementiertes Verfahren nach einem der Ansprüche 1 bis 8, bei dem jede Beobachtung eine Stichprobe aus einer Wahrscheinlichkeitsverteilung auf Grundlage des Zustandes der realen Umgebung (106) ist.

10. System, umfassend einen oder mehrere Rechner und ein oder mehrere Speichervorrichtungen, die Anweisungen speichern, die, wenn sie durch den einen oder die mehreren Rechner ausgeführt werden, veranlassen, dass der eine oder die mehreren Rechner das Verfahren nach einem der Ansprüche 1 bis 9 durchführen.

11. Ein oder mehrere Rechner-Speichermedien, die Anweisungen speichern, die, wenn sie durch einen oder mehrere Rechner ausgeführt werden, veranlassen, dass der eine oder die mehreren Rechner das Verfahren nach einem der Ansprüche 1 bis 9 durchführen.

**Revendications**

1. Procédé mis en oeuvre par ordinateur pour générer d'actions à réaliser par un agent électromécanique (104) interagissant avec un environnement du monde réel (106), l'environnement du monde réel (106) prenant à des moments successifs un état correspondant d'une pluralité d'états,

le procédé comprenant le fait de modifier successivement un réseau neuronal (110) qui est opérationnel pour générer les actions et qui est défini par une pluralité de paramètres de réseau, par, à chacun d'une pluralité de pas de temps successifs :

(a) l'utilisation du réseau neuronal (110) pour générer une action sur la base d'une observation actuelle de l'environnement du monde réel (106) au pas de temps ;
(b) le fait d'amener l'agent électromécanique (104) à réaliser l'action générée sur l'environnement du monde réel (106) ;
(c) l'obtention d'une observation supplémentaire de l'état de l'environnement du monde réel (106) après la réalisation de l'action générée par l'agent électromécanique (104) ;
(d) la génération d'une valeur de récompense en tant que mesure de la divergence entre (i) la probabilité de l'observation supplémentaire selon un premier modèle statistique de l'environnement du monde réel (106) et (ii) la probabilité de l'observation supplémentaire selon un deuxième modèle statistique de l'environnement du monde réel (106), dans lequel :

le premier modèle statistique est basé sur un premier historique d'observations passées de l'état de l'environnement du monde réel (106) et d'actions,
le deuxième modèle statistique est basé sur un deuxième historique d'observations passées de l'état de l'environnement du monde réel (106) et d'actions, et
l'observation la plus récente dans le premier historique est plus récente que l'observation la plus récente dans le deuxième historique ; et

(e) la modification d'un ou plusieurs paramètres de réseau du réseau neuronal (110) sur la base de la valeur de récompense ; dans lequel

le premier et le deuxième modèle statistique sont respectivement des première et deuxième distributions de probabilité pour l'observation supplémentaire, l'observation la plus récente dans le premier historique se situant $H$ pas de temps dans le passé par rapport au pas de temps, où $H$ est un nombre entier supérieur à zéro.

2. Procédé mis en oeuvre par ordinateur selon la revendication 1, dans lequel l'observation la plus récente dans le deuxième historique se situe $H+1$ pas dans le passé par rapport au pas de temps ; de préférence, dans lequel $H$ est supérieur à un.

3. Procédé mis en oeuvre par ordinateur selon la revendication 1 ou 2, dans lequel la mesure est la différence entre une fonction logarithmique de la probabilité de l'observation supplémentaire selon la première distribution de probabilité et la fonction logarithmique de la probabilité de l'observation supplémentaire selon la deuxième distribution de probabilité.

4. Procédé mis en oeuvre par ordinateur selon l'une quelconque des revendications 1 à 3, dans lequel chaque modèle statistique est défini par un système adaptatif respectif défini par une pluralité de paramètres ; de préférence,

dans lequel chaque système adaptatif comprend une unité de génération de distribution de probabilité respective qui reçoit un codage des actions de codage d'historique et de données respectives réalisées par l'agent électromécanique (104) après l'action la plus récente enregistrée dans l'historique respectif, l'unité de génération de distribution de probabilité étant agencée pour générer une distribution de probabilité pour l'observation supplémentaire sur la pluralité d'états du système ; plus préférentiellement,
dans lequel l'unité de génération de distribution de probabilité est un perceptron multicouche.

5. Procédé mis en oeuvre par ordinateur selon la revendication 4, dans lequel le codage est généré par une unité récurrente qui reçoit successivement les actions et représentations correspondantes des observations qui en résultent ; de préférence,
dans lequel la représentation de chaque observation est obtenue en tant que sortie d'un modèle convolutionnel qui reçoit l'observation.

6. Procédé mis en oeuvre par ordinateur selon la revendication 4 ou 5, dans lequel le système adaptatif pour le deuxième modèle statistique est une unité de génération de probabilités multi-actions fonctionnant pour générer une distribution de probabilité respective sur les observations possibles de l'état du système suite à l'application successive d'un nombre pluriel correspondant d'actions générées par le réseau neuronal (110) et introduites dans l'unité de génération de probabilités multi-actions.

7. Procédé mis en oeuvre par ordinateur selon l'une quelconque des revendications 1 à 6, dans lequel la valeur de récompense comprend en outre une composante de récompense indiquant un degré selon lequel l'action réalise une tâche.

8. Procédé mis en oeuvre par ordinateur selon l'une quelconque des revendications 1 à 7, dans lequel un réseau neuronal (110) est un réseau de politique qui émet en sortie une distribution de probabilité sur des actions possibles, l'action étant générée en tant qu'échantillon de la distribution de probabilité.

9. Procédé mis en oeuvre par ordinateur selon l'une quelconque des revendications 1 à 8, dans lequel chaque observation est un échantillon d'une distribution de probabilité basée sur l'état de l'environnement du monde réel (106).

10. Système comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé selon l'une quelconque des revendications 1 à 9.

11. Un ou plusieurs supports de stockage informatique stockant des instructions qui, lorsqu'elles sont exécutées par un ou plusieurs ordinateurs, amènent les un ou plusieurs ordinateurs à réaliser le procédé selon l'une quelconque des revendications 1 à 9.

RL Control system 140

Neural network updater
112

_100_

Reward Generator
130

Action
102

Neural network 110

Agent
104

Predictor 120

Environment
106

Observation
108

Evaluator 140

Fig. 1

EP 3 915 053 B1

$a_{t+H}$

RL Control system 140

R2D2 unit

$o_{t+H-1}$  $a_{t+H-1}$

$o_{t+H}$

Fig. 2

Reward generator 130

$$r_{t+H-1}^{NDIGO} \overset{\text{def}}{=} L\big(o_{t+H}, \hat{p}_{t+H|t-1}\big) - L\big(o_{t+H}, \hat{p}_{t+H|t}\big)$$

Evaluator 140

$\hat{p}_b(\cdot \mid b_t)$

$x_t$

1401

$b_t$

Predictor 120

1203

$\hat{p}_{t+1|t}$

$f_{\psi_1}$

$b_t$  $a_t$

1203

$\hat{p}_{t+k|t}$

$f_{\psi_k}$

...

$b_t$  $\mathcal{A}_{t:\,t+k}$

1203

$\hat{p}_{t+K|t}$

$f_{\psi_K}$

...

$b_t$  $\mathcal{A}_{t:\,t+K}$

$f_\theta$

$b_{t-1}$

1201

$z_t$  $a_{t-1}$

$f_\phi$

1202

$o_t$

Fig. 3

300

Use a neural network to generate an action based on a current observation of the subject system at a current time — 301

Causing the agent to perform the generated action on the subject system — 302

Obtain a further observation of the state of the subject system following the performance of the generated action — 303

Generate a reward value as a measure of the divergence between the likelihood of the further observation under first and second statistical models of the subject system, the first statistical model and second model being based on respective first and second histories of past observations and actions, the most recent observation in the first history being more recent than the most recent observation in the second history — 304

Modify one or more said network parameters of the neural network based on the reward value — 305

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JÜRGEN SCHMIDHUBER.** Formal Theory of Creativity, Fun, and Intrinsic Motivation (1990-2010. *IEEE Transactions on Autonomous Mental Development,* September 2010, vol. 2 (3), 230-247

- **KAPTUROWSKI et al.** Recurrent Experience Replay in Distributed Reinforcement Learning. *International Conference on Learning Representations,* 2019